Europäisches Patentamt

European Patent Office

Office européen des brevets

(11) Veröffentlichungsnummer: **0 429 747 A2**

## (12) EUROPÄISCHE PATENTANMELDUNG

(21) Anmeldenummer: 90109774.1

(22) Anmeldetag: 23.05.90

(51) Int. Cl.⁵: **B01D 33/044**, B01D 37/03, B01D 33/64

(30) Priorität: 29.11.89 DE 3939426

(43) Veröffentlichungstag der Anmeldung:
05.06.91 Patentblatt 91/23

(84) Benannte Vertragsstaaten:
AT BE CH DE DK ES FR GB GR IT LI LU NL SE
Patentblatt 1

(71) Anmelder: **Ralf F. Piepho Abwassertechnik GmbH**
**Rittergut 2**
**W-3015 Wennigsen 5(DE)**

(72) Erfinder: **Die Erfindernennung liegt noch nicht vor**

(74) Vertreter: **Rücker, Wolfgang, Dipl.-Chem.**
**Alte Dorfstrasse 16**
**W-3160 Lehrte OT Arpke(DE)**

(54) Verfahren und Vorrichtung zur Abtrennung von Feststoffen aus einer Flüssigkeit oder zum Abtrennen von aus Emulsionen ausgefällten Sedimenten.

(57) Beschrieben wird eine Vorrichtung und ein Verfahren zur Abtrennung von Feststoffen aus einer Flüssigkeit. Die Vorrichtung enthält eine Trommel, deren Mantel wenigstens eine, vorzugsweise zwei diamitral gegenüberliegende Öffnungen aufweist. Die Trommel liegt mit ihrem Umfang in der Bucht eines angetriebenen Gliederbandes, wobei zwischen Gliederband und Trommelmanteloberfläche ein Filterband mitläuft. Der Innenraum der Trommel nimmt die zu behandelnde Flüssigkeit auf und dient als Reaktions- und Absetzbehälter. Die Trommel wird schrittweise oder kontinuierlich während des gesamten Verfahrens gedreht.

Fig. 1

EP 0 429 747 A2

Xerox Copy Centre

## VERFAHREN UND VORRICHTUNG ZUR ABTRENNUNG VON FESTSTOFFEN AUS EINER FLÜSSIGKEIT ODER ZUM ABTRENNEN VON AUS EMULSIONEN AUSGEFÄLLTEN SEDIMENTEN.

Die Erfindung betrifft eine Vorrichtung und ein Verfahren zum Abtrennen von Feststoffen aus einer Flüssigkeit bzw. zum Abtrennen von aus Emulsionen ausgefälten Sedimenten mit einem Bandfilter, einer Mischvorrichtung und Einrichtungen zum Zudosieren von Chemikaliengemischen.

In der europäischen Patentschrift 0 067 959 ist eine solche Vorrichtung beschrieben, die auch transportabel sein kann und die dazu verwendet wird, verbrauchte Emulsionen oder Industrieabwässer aufzubereiten indem man diese Emulsionen mit geeigneten Chemikalien spaltet und das Sediment von der Flüsigkeit, die praktisch immer Wasser ist, abtrennt.

Diese Vorrichtung umfaßt nun einen Reaktionsbehälter in welchem sich das aufzubereitende Abwasser befindet und in welchem Mischvorrichtungen oder Rührwerke angeordnet sind um das Chemikaliengemisch mit' dem Abwasser innig zu vermischen, einen anschließenden Behälter in welchem das mit dem Chemikaliengemisch vermischte Abwasser verweilt damit die Spaltreaktion ablaufen und die sich bildende Ausflockung sedimentieren kann und eine Filtervorrichtung über die das verweilte Abwasser mit dem Sediment einem Filtratsammeltank zufließt. Dabei bleibt das Sediment auf dem Filberband zurück.

Diese Vorrichtung ist sehr nützlich und stellt eine wertvolle Einrichtung zur Reinhaltung der Abwässer dar. Sie hat jedoch den Nachteil, daß sie verhältnismäßig viel Stellfläche wegen der verschieden angeordneten Behälter beansprucht und daß sie für kleinere Betriebe oder für begrenzte Räume bei möglich gleichbleibender Leistung nicht sehr praktisch ist.

In der älteren, nicht vorveröffentlichten deutschen Patentanmeldung P 38 42 557 ist eine Vorrichtung für ein analoges Verfahren zur Aufbereitung von industriellen Abwässern und Emulsionen beschrieben, bei der eine kompaktere Bauweise dadurch erzielt wird, daß die Filtervorrichtung eine Trommel umfaßt, die schwimmend in einer Bucht eines endlosen aus einzelnen gelenkig verbundenen Gliedern bestehenden Förderbandes ruht, von diesem in Umdrehungen versetzt wird und ein Filterband aus einem Vlies zwischen Trommelmantel und Förderband mitgenommen wird, da die Trommel Öffnungen aufweist. Das sich in der Trommel bildende Sediment wird zunächst von der Trommel mitgenommen und dann auf das Förderband übertragen um schließlich die Vorrichtung zusammen mit dem sich verbrauchten Filterband zu verlassen.

Bei dieser Ausgestaltung ist bereits eine kompaktere Bauweise dadurch erzielt worden, daß nur noch der Reaktionsbehälter getrennt neben der Filtervorrichtung vorhanden ist und die Verweilzeit in einem Behälter stattfindet, der auch die Trommel mit dem Filterband enthält, so daß auf einen zusätzlichen Reaktionsbehälter, in dem die Flüssigkeit eine bestimmte Zeit verweilen muß, verzichtet werden kann.

Aufgabe der vorliegenden Erfindung ist es nunmehr eine weitere Kompaktierung einer solchen eingangs beschriebenen Vorrichtung zu erlangen wodurch die Vorrichtung selbst, unter Verzicht auf getrennte Mischbehälter und Reaktionsbehälter, praktisch nur noch einen Behälter aufweist, der beide in sich vereinigt und wodurch die Vorrichtung zu einem höchst anpassungsfähigen Gerät oder Aggregat wird, welches auf kleinstem Raum und eine relativ hohe Durchsatzleistung aufweist, unterbringbar ist, so daß damit weiteren industriellen Betrieben Möglichkeiten einer ordnungs- und zeitgemäßen Abwasserreinigung ermöglicht wird.

Gelöst wird diese Aufgabe durch die in den Ansprüchen gekennzeichneten Ausgestaltungen und Verfahren.

Erfindungsgemäß ist dabei der Mischbehälter in welchem das zu reinigende oder aufzubereitende Abwasser mit dem Chemikaliengemisch vermischt wird und der Behälter in welchem die Verweilzeit zur chemischen Reaktion zwischen dem Chemikaliengemisch und dem Abwasser bereitgestellt wird, zusammengelegt und befindet sich in einer sich drehenden Trommel mit einer Mantelfläche, die wenigstens eine, vorzugsweise zwei, diametral gegenüberliegende Öffnungen besitzt und die durch ein motorisch angetriebenes Gliederband in Umdrehungen versetzt wird, zu diesem Zweck liegt die Trommel in einer Bucht eines endlosen Gliederbandes. Ein Filterband, vorzugsweise ein Vlies, dessen Breite der Breite der Trommel entspricht, wird zwischen Trommelmanteloberfläche und Gliederband mitgenommen. Am Austrittsende, wo sich das Gliederband von der Mantelfläche der Trommel trennt, wird es unter einer Preßwalze hindurch geführt und schließlich abgeworfen. Das auf dem Filterband befindliche Sediment oder der Niederschlag wird dabei gepreßt und entwässert. Vorzugsweise dreht sich die Trommel nur schrittweise über kurze Entfernungen, sie kann sich auch langsam und kontinuierlich drehen. Die Rotationsgeschwindigkeit ist regelbar und wird von der Art des Filtrationsvorganges bzw. von der Art des zu behandelnden Abwassers bestimmt.

Es ist nun leicht verständlich, daß die Trommel, die einen Mantel besitzt, der wenigstens an einer Stelle mit Öffnungen versehen ist, einen Reaktionsbehälter bzw. einen Behälter für die verweilende Flüssigkeit, die mit den Chemikalien vermischt ist, bildet, wobei die Trommel etwa zu einem Drittel ihres Durchmessers oder mehr gefüllt ist. Im Inneren der Trommel ist auf einem durch eine seitliche Öffnung hineinragenden Kragarm eine Mischturbine befestigt. Dieser Kragarm dient auch als Zuführeinrichtung für das Chemikaliengemisch, welchem zumm Spalten von Emulsionen vorgesehen ist. Außerdem befindet sich im Inneren der Trommel und an dem Kragarm befestigt, eine Einrichtung zur Überwachung des Flüssigkeitsniveaus.

Die Trommel hat vorzugsweise zwei einander gegenüberliegende Öffnungen in einem Mantel. Die Größe dieser Öffnungen richtet sich nach dem Volumen der Trommel.

Auf der Innenseite des Trommelmantels, also auf dem nichtdurchbrochenen Teil des Mantels, können in Durchmesserrichtung verlaufende Rippen in Form von niedrigen Blechen befestigt sein deren freie obere Kanten nacheilend zur Umdrehungsrichtung stehen.

Die Preßwalze, welche das auf dem Filterband befindliche und zwischen Gliederband und Trommel entlang beförderte Filterband preßt und dabei entwässert, ist in zu Schwenkarmen gelagert deren Schwenkpunkte auf dem äußeren Gehäuseteil an der Vorrichtung liegen und die auf einen Teil des Gliederbandes einwirkt. Die Vorratsrolle für das Filterband ist in einem Rollenkörper gelagert und betätigt beim Erreichen eines bestimmten Minimaldurchmessers eine Schaltvorrichtung, die auf die auszuwechselnde Rolle hinweist bzw. die Maschine abschaltet.

Durch diese sehr vereinfachte, leicht zu überwachende und zu wartende Ausgestaltung besteht das eigentliche Gehäuse der Vorrichtung lediglich aus Seitenwänden die gegeneinander in ihren Stellungen gehalten werden durch die verschiedenen Lagerachsen für das endlose Gliederband und für die Vorratsrolle an Filterband.

Der untere Teil des aus beiden Seitenwänden gebildeten Gehäuses ist zu einer Wanne ausgebildet, in die das gereinigte Abwasser dann einfließt sobald die Kante, eines die eine Öffnung der Trommel begrenzenden Trommelmantelteils, unter das in der Trommel eingestellte Flüssigkeitsniveau tritt. Dann strömt die Flüssigkeit entgegen der Drehrichtung der Trommel über das wehrartige Ende des Trommelmantelteils in die Wanne und schließlich in eine Vertiefung die als Sammelbehälter für das gereinigte Abwasser dient und aus dem es abgepumpt wird.

Da die Trommel sowohl als Reaktionsbehälter als auch als Sedimentationsbehälter dient, kann sich der Niederschlag zu Boden setzen, d.h. auf den ununterbrochenen Teil des Trommelmantels und da sich die Trommel langsam, vorzugsweise schrittweise, dreht, wobei zwischen jedem Takt die Trommel wieder still steht, kann über eine lange Zeitspanne Sediment ausfallen und sedimentieren und wird von dem ausströmenden, gereinigten Abwasser auf das in der Öffnung des Trommelmantels frei zu Tage liegenden Filterband überführt.

Das gereinigte Abwasser strömt durch das Filterband hindurch, wobei feine Teilchen ausgefiltert werden und gelangt in die unter der Trommel angeordnete Wanne, durch die auch das untere Trum des Gliederbandes hindurchgeführt ist.

Seitlich zu der Verrichtung befinden sich auf einer Seite die Antriebsmotoren für das endlose Gliederband und ein Antriebsmotor für die Dosiervorrichtung mit der das Chemikaliengemisch zur Behandlung der aufzubereitenden Abwässer in das Trommelinnere befördert wird. Die Seitenwände der Trommel weisen größere Öffnungen auf, so daß die Installation der Mischvorrichtungen und des Niveauschalters problemlos erfolgen kann. Durch diese Öffnungen wird in geeigneter Weise auch das zu reinigende Wasser in das Innere der Trommel geleitet.

Die Ausgestaltung ist dabei so getroffen, daß die Gewichte auf den beiden Seiten der Vorrichtung ausgeglichen oder annähernd ausgeglichen sind. Das Gewicht der beiden Motoren mit Getriebe entspricht etwa dem Gewicht der Dosiervorrichtung mit dem Vorrat an Chemikaliengemisch zur Flüssigkeitsbehandlung. Beide Motoren sind regelbar, so daß, wie bereits ausgeführt, die Rotationsgeschwindigkeit varriert werden kann als auch die Menge an Chemikalien die dem zu reinigenden Abwasser zugeführt wird.

Die Erfindung wird nun anhand eines Ausführungsbeispiels näher beschrieben, welches in der beigefügten Zeichnung dar-gestellt ist.

Es bedeuten:

Fig.1 : ein Querschnitt durch die erfindungsgemäße Vorrichtung in schematischer Darstellung;

Fig.2 : eine Schnittansicht in schematischer Darstellung von einer Stirnseite aus gesehen;

Fig.3 : eine Draufsicht auf die Vorrichtung und

Fig.4 : eine Ansicht entsprechend Fig.2.

Fig.5 : eine Seitenansicht einer abgewandelten Ausgestaltung der Vorrichtung nach Fig. 1,

Fig.6 : ein Querschnitt von einer Stirnseite ausgesehen einer abgewandelten Ausgestaltung ähnlich der Fig. 2 und

Fig.7 : eine Schnittdarstellung durch ein Detail im Trommelmantel der Fig. 5 + 6

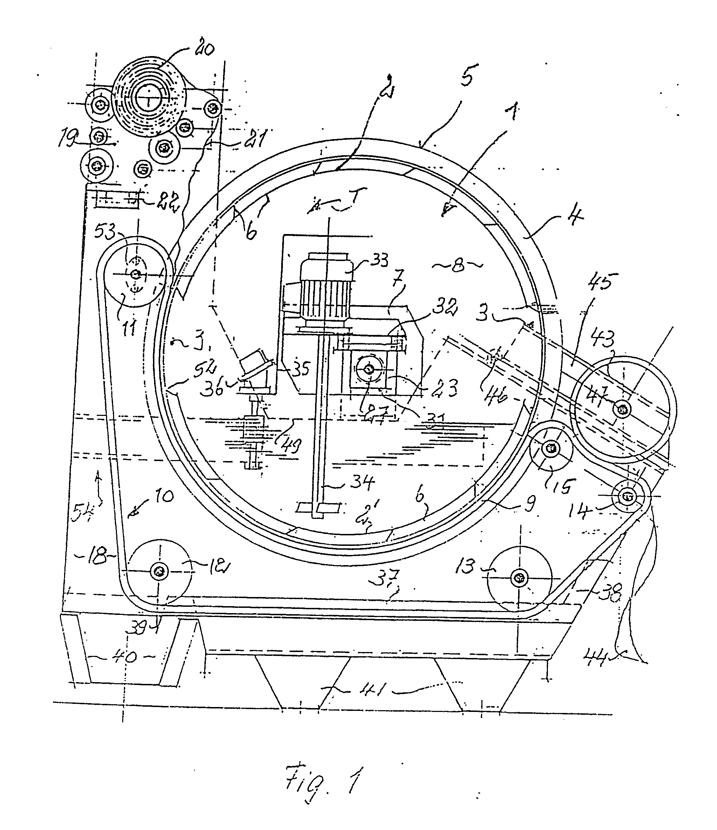

Die Vorrichtung ist in ihrem generellen Aufbau deutlich aus Fig. 1, die die wesentlichen Teile im Schnitt zeigt, zu erkennen.

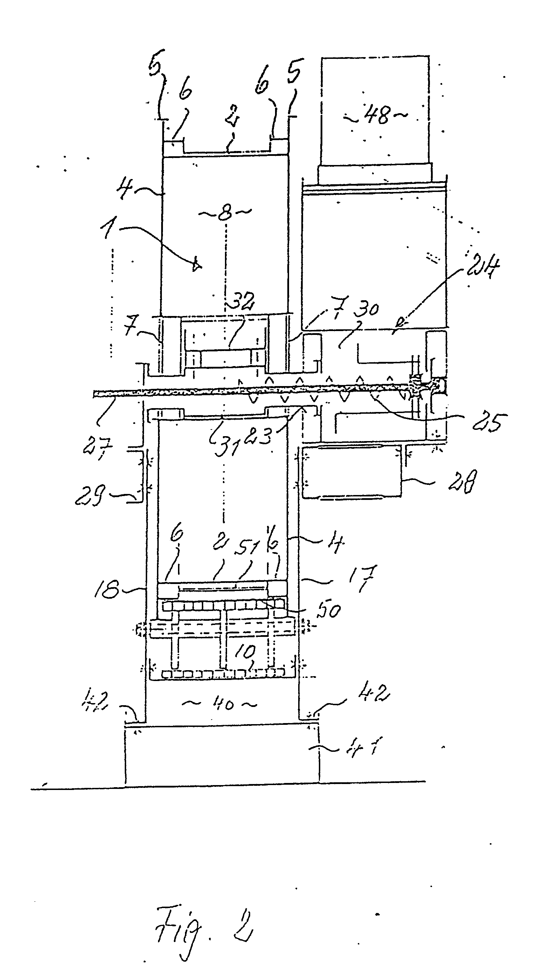

Das Hauptteil dieser Vorrichtung ist eine Trommel 1, zylindrischer Gestalt, mit einem Mantel 2, der im dargestellten Ausführungsbeispiel an zwei diametral gegenüberliegenden Stellen Öffnungen 3 aufweist. Die Enden der zylindrischen Trommel sind durch kreisförmige Bleche 4 abgedeckt die mit ihren Rändern flanschartig, wie bei 5 dargestellt, über den Trommelmantel hinausragen. Diese Ausgestaltung ist deutlich aus Fig. 2 ersichtlich.

In den Ecken zwischen Trommelmantel 2 und flanschförmigen Rändern 5 der wändebildenden Abdeckungen 4 der Trommel sind Einbauten 6 gebildet, deren Zweck weiter unten erläutert werden wird.

Die Trommel ist in ihren Abdeckungen 4 mit größeren Ausnehmungen 7 versehen, durch die von den Seiten ein Zugang zum Innenraum 8 der Trommel möglich ist.

Die Trommel 1 besitzt keine Achslager, sondern liegt in der Bucht 9 eines endlosen Gliederbandes 10, welches um Führungsrollen 11,12,13,14 und 15 herumläuft, von denen die Rolle 11 über einen Getriebemotor 16 angetrieben ist und zwar erfolgt der Antrieb sowohl kontinuierlich und regelbar in seiner Rotationsgeschwindigkeit als auch diskontinuierlich schrittweise mit regelbarer Geschwindigkeit.

Die Lagerung der Rollen 12 bis 15 erfolgt auf Lagerachsen die gleichzeitig Distanzhalter zwischen den seitlichen Gehäusewänden 17 und 18 bilden. Die Seitenwände tragen außerdem auf einer Seite eine Rollenanordnung 19 zwischen sich, in der eine Vorratsrolle 20 eines Filterbandes 21 liegt, wobei die Rollenanordnung 19 V-förmig oder trichterförmig ausgestaltet ist, so daß die Vorratsrolle 20 bei Abnahme ihres Durchmessers, zu Folge des Verbrauches an Filterband, mehr und mehr nach unten in den Trichter rutscht um schließlich kurz vor Zuendegehen des Filterbandvorrates ein Signal auszulösen bzw. die Maschinen abzuschalten, entsprechend Betätigungseinrichtungen, die vielerlei Ausgestaltungen haben können, sind bei 22 dargestellt.

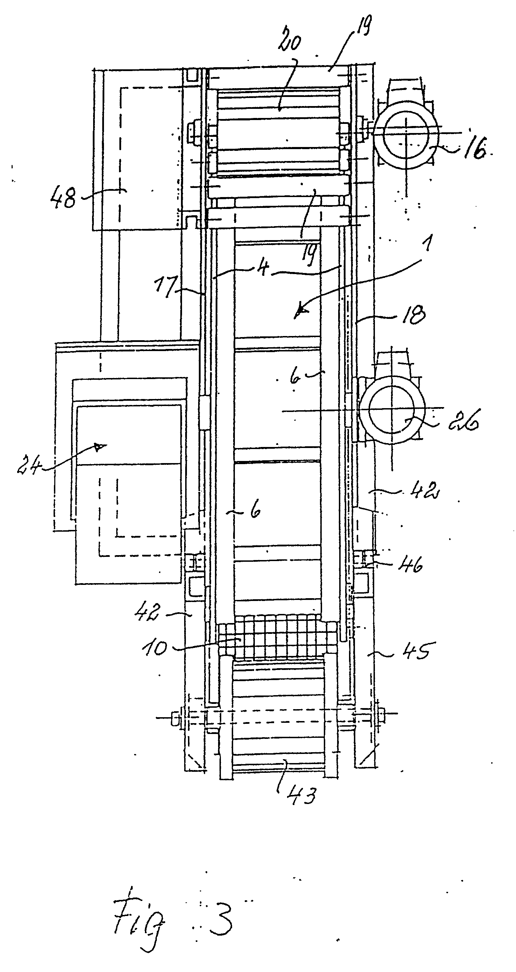

In das Innere der Trommel 1 ragt nun von einer Seite das Gehäuse 23 einer Dosiervorrichtung 24 hinein in welchem eine Schnecke 25 drehbar gelagert ist die von einem Getriebemotor 26 (Fig.3) angetrieben ist, der in Fig. 2 weggelassen ist. Der Getriebemotor ist durch eine Steckverbindung mit einen Drehmoment aufnehmenden Wiederlager auf das Ende 27 der Welle der Schnecke 25 aufsteckbar.

Die Dosiervorrichtung 24 ist über Konsolen 28 und 29 an der Gehäusewand 17 befestigt und gehalten. Die Dosiervorrichtung enthält einen Vorrat eines Chemikaliengemisches das in das Gehäuse der Schnecke über die Öffnung 30 hineinfällt und durch Justierung der Rotationsgeschwindigkeit der Schnecke 25 dem Innenraum der Trommel 1 zudosiert werden kann, je nach Art der aufzubereitenden Flüssigkeit.

Das Chemikaliengemisch fällt dann durch die Öffnung 31 in das Trommelinnere. Über die seitlichen Öffnungen 7, in den kreisförmigen Blechen 4, die die Seitenwände der Trommel bilden, erfolgt auch die Zuführung der zu behandelnden Flüssigkeit bzw. des Abwassers.

Auf einem Träger 32, der auf dem Gehäuse 23 der Schnecke 25 der Dosiervorrichtung befestigt ist, ist ein Motor 33 befestigt, der eine Mischvorrichtung 34 antreibt. Der Träger 32 der den Motor 23 trägt, dient ebenfalls als Halter für eine weitere Tragvorrichtung oder Winkel 35 in dem ein Niveauschalter befestigt ist.

Die Seitenwände 17 und 18 der Vorrichtung werden an ihren unteren Rändern durch eine wannenförmige Platte 37 abgeschlossen, die an dem einen Ende ein aufwärtsragendes Teil 38 aufweist und am anderen Ende einen Überlauf 39 hat, der in eine Sammelrinne 40 mündet, die die gereinigte Flüssigkeit aufnimmt und aus der sie schließlich abgeleitet wird.

Die Vorrichtung insgesamt ruht auf Kufen 41, die mit den unteren abgewinkelten Enden 42 der Seitenwände 17 und 18 verschraubt sind.

Das Filterband 21 wird wie aus Fig. 1 ersichtlich, zwischen Trommelumfang und dem Teil des endlosen Gliederbandes 10 geführt soweit das Gliederband mit seiner Bucht 9 die Trommel umschlingt. Am Ende der Umschlingung, wo sich das Gliederband über die Führungsrolle 15 von der Trommel trennt, wird das Filterband ebenfalls mitgenommen und unter einer Preßwalze 43 hindurchgeführt, wo es schließlich nach Trennung von dem Gliederband und nach Passieren der Führungsrolle 14, wie bei 44 gezeigt, verworfen wird.

Die Preßwalze 43 ist an Armen 45 gelagert, die wiederum bei 46 auf Randteilen der Gehäusewände 17 und 18 schwenkbar gelagert sind.

Die Preßwalze 43 preßt das Filterband 21, welches auf dem Gliederband 10 zwischen den Führungsrollen 14 und 15 mitgenommen wird und entwässert dabei den Niederschlag. Die Preßwalze 43 ist auf einer Stange 47 drehbar gelagert, wobei die Stange wiederum die Arme 45 distanziert und hält.

48 bezeichnet einen Schaltkasten für die elektrischen Schalt- und Regeleinrichtungen über die die Motoren der Vorrichtung geregelt und geschaltet werden, sowie die sonstigen Signal- und Überwachungseinrichtungen.

Die Wirkungsweise der Vorrichtung ist nun folgende:

Über nichtdargestellte Leitungen wird dem Innenraum 8 der Trommel in der in Fig. 1 gezeigten Stellung, die zu behandelnde Flüssigkeit, im überwiegenden Falle Wasser oder eine wäßrige Emulsion, zugeführt, bis diese den Pegel bzw. das Niveau in der Trommel erreicht hat, welches bei 49 skizziert ist. Vorher ist die Trommel durch das Gliederband 10 soweit vorbereitet worden, daß das Filterband 21 den von dem Gliederband umschlungenen Teil der Trommeloberfläche umgibt bzw. abdeckt und dieses bis über die Führungsrolle 14, also unterhalb der Preßwalze hindurch, befördert ist, also jene Lage eingenommen hat, die in Fig. 1 gezeigt ist, wo das Filterband mit einem Ende über die Führungsrolle 14 hinaushängt. Die beiden Öffnungen 3 im Trommelmantel 2 liegen dann in einer horizontalen Ebene, so daß der untere Trommelmantelteil mit den Blechen 4 einen Behälter für die zu behandelnde Flüssigkeit bildet.

Dann hat auch die Trommel eine Stellung eingenommen in der die beiden Öffnungen 3 im Mantel der Trommel oberhalb des Flüssigkeitspegels 49 liegen. Das Gliederband 10 mit dem daraufliegenden Filterband stützt sich dabei gegen die Einbauten 6 auf den Trommelmantelteilen ab, so daß zwischen dem eigentlichen Trommelmantel 2 und dem Filterband, welches in Fig. 2 durch den dicken Strich 50 gekennzeichnet sein soll, ein freier Raum 51 verbleibt.

Jetzt, nachdem also die Flüssigkeit den in Fig. 1 dargestellten Stand erreicht hat und die Trommel sich in dieser Stellung befindet, wird über die Schnecke 25 (Fig.2) das Chemikaliengemisch zur Behandlung der Flüssigkeit zudosiert unter Betätigung der Welle der Schnecke 25 so daß diese durch die Öffnung 31 in die Flüssigkeit hineinfällt. Daraufhin wird die Mischvorrichtung 34 unter Energiezufuhr zu dem Motor 33 in Gang gesetzt, so daß das Chemikaliengemisch innig mit der Flüssigkeit vermengt wird. Der Niveauschalter 36 sorgt dafür, daß der Flüssigkeitsstand oder Pegel nicht so hoch stehen kann, daß die Flüssigkeit durch die Öffnungen 3 überfließt. Ist die Mischvorrichtung in Gang gesetzt, so werden die Chemikalien gleichmäßig in der Flüssigkeit verteilt. Es beginnt ein physilo-chemischer Reaktionsprozeß, der dazu führt, daß die in der Flüssigkeit enthaltenen Schadstoffe ausgeflockt werden und sedimentieren.

Sie sammeln sich also auf der innenliegenden Oberfläche des Trommelmantels 2. Nach dem innigen Vermischen wird die MischVorrichtung abgeschaltet, so daß eine Verweilzeit beginnt, in der diese Prozesse ablaufen können und Sedimentationen erfolgen kann.

Während all dieser Zeit der Zuführung der Flüssigkeit, der Zudosierung des Chemikaliengemisches, des Vermischens beider, der Reaktionsprozesse und des Sedimentierens, dreht sich die Trommel entweder kontinuierlich oder schrittweise mit einer Geschwindigkeit, die so eingestellt ist, daß die Flüssigkeit gerade über den Rand 52 des Mantelteils 2 der Trommel zu strömen beginnt, wenn der Reaktionsprozeß und die Sedimentation weitgehend beendet sind.

Da sich die Ausflockungen, die sich in der Flüssigkeit bilden, zu Boden sinken, kann die Entleerung der Trommel bereits beginnen ehe diese Ausflockungen den Boden des Trommelteils erreicht haben. Insbesondere bei schrittweiser Rotation der Trommel ist somit schon ein Entleeren möglich noch ehe das gesamte ausgeflockte Gut vollständig sedimentiert hat. Sich schwer und langsam absetzende, feinteilige Flockung wird auf dem Filterband 21 zurückgehalten, welches ja zwischen Trommelumfang und Gliederband 10 liegt, in einer Länge, die dem Umschleunigungswinkel des Gliederbandes mit der Trommel entspricht. Da immer wieder neues Filterband zwischen Gliederband und Trommel mitgenommen wird ist gewährleistet, daß die sich auf der wannenförmigen Platte 37 sammelnde Flüssigkeit frei von Sediment ist.

Wie bereits oben ausgeführt, wird die Trommel durch das Gliederband 10 in Richtung des Pfeiles T in Umdrehung versetzt indem die Rolle 11, die natürlich auch Führungsrolle ist, angetrieben ist. Diese Rolle ist, weil sie angetrieben ist, auch anders gelagert als die übrigen Führungsrollen, was durch den Kupplungsflansch 53 angedeutet ist.

Spätestens dann, wenn der in Fig. 1 unten liegende Mantelteil 2 vertikal steht wird der sich am Boden gesammelte Niederschlag vollständig auf das Filterband abgelegt sein und eine vollständige Entleerung der Trommel stattgefunden haben. Damit das Sediment sich ordnungsgemäß ablegen kann und der erforderliche Raum dafür vorhanden ist, ist ein freier Raum 51 zwischen Glieder-band und Trommelmantel 2 vorgesehen.

Das nun den Niederschlag bzw. das Sediment tragende Filterband 2 bewegt sich mit dem Gliederband 10 weiter im Sinne der Bewegungsrichtung des Gliederbandes, was noch einmal durch den Pfeil 54 angedeutet wird, läuft unter der Preßwalze 43 hindurch, wird dort entwässert und mit dem Filterband zusammen, abgeworfen.

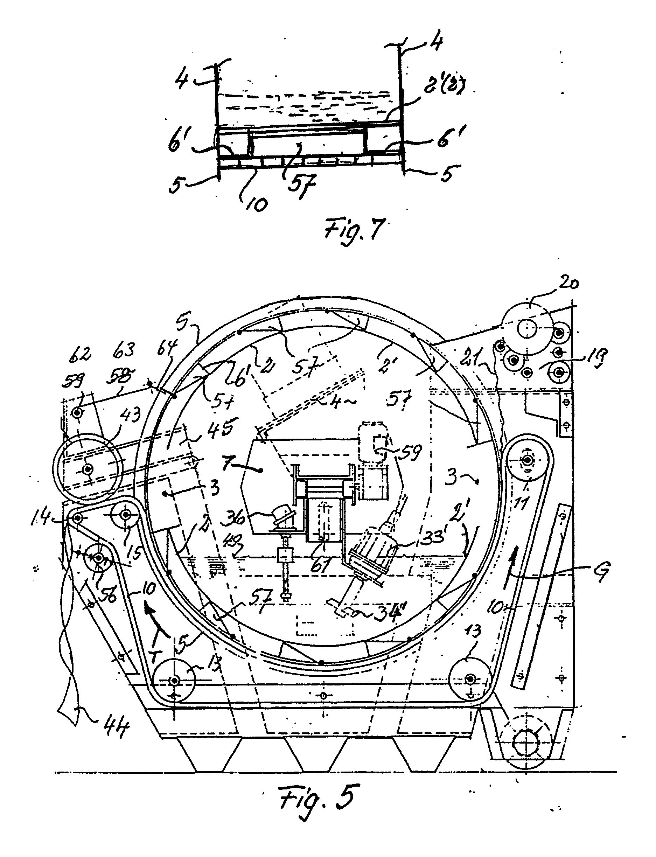

Die Trommel dreht sich in Richtung des Pfeiles T (Fig.5). Das Gliederband bewegt sich in Richtung des Teiles G (Fig. 5).

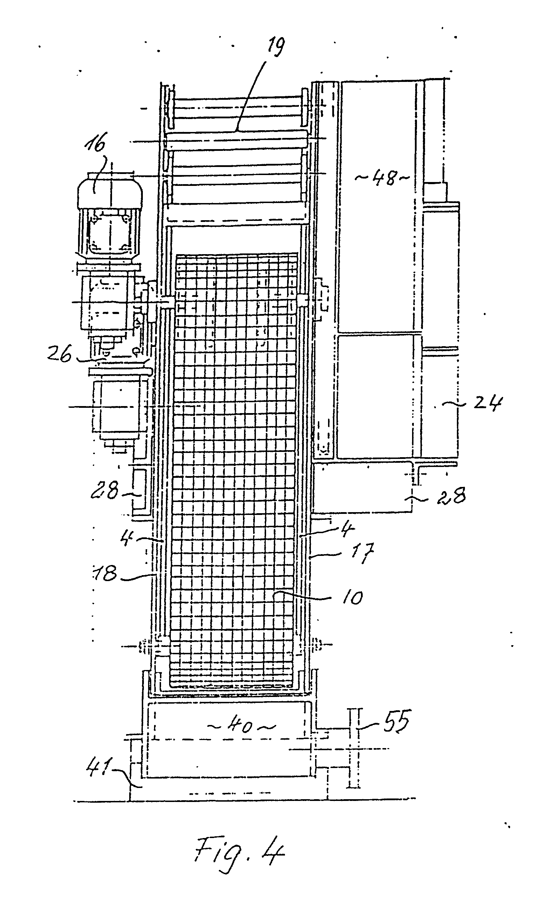

In den Fig. 5, 6 und 7 ist eine abgewandelte Ausgestaltung der Vorrichtung der Fig. 1-5 dargestellt. Die Ausgestaltung der Fig. 5-7 entspricht praktisch vollständig denen der Fig. 1-4, jedoch ist die Laufrichtung der Trommel 1 entgegengesetzt, also im Uhrzeigersinn, während sie in der Ausgestaltung der Figuren 1-4 entgegengesetzt zum Uhrzeigersinn rotiert.

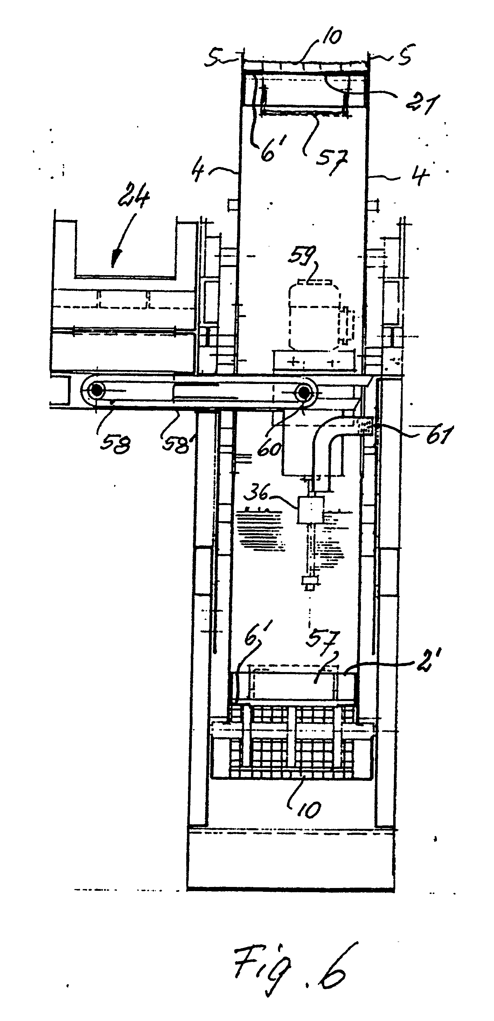

Dieses ist erkennbar an der Führung des Filterbandes 21. Die innere Anordnung der Mischturbine mit Motor 33' und der Mischvorrichtung 34' sowie die Dosiervorrichtung für das Trennmittel ist kompakter, aber in der Wirkung entsprechend. Statt der Verwendung einer Transportschnecke zur Dosierung des Trennmittels, ist gemäß Fig. 5 und 6 ein Zellenband 58 vorgesehen, die das feinteilige Trennmittel in die Flüssigkeit dosieren. Das Zellenband 58 gleitet dabei mit seinem unteren Trum auf eine Platte 58' die in einen Schacht übergeht, an dessen Rand die Zellen freigegeben werden, so daß das Trennmittel in die Flüssigkeit hineinfällt.
Eine weitere Abwandlung zur Ausgestaltung nach Fig. 1-4 ist die Ausbildung der äußeren Oberfläche der kreisbogenförmigen Teilschalen 2' des Trommelmantels 2.
Wie aus Fig. 5 bis 6 ersichtlich, sind auf der äußeren Oberfläche der Schalen 2' keilförmige im Querschnitt U-förmige Teile befestigt, die zusammen mit dem Zellenband und dem darauf liegenden Filterband Taschen 57 bilden, die schmäler sind als die Trommel breit ist. Die Tiefe dieser so gebildeten Taschen nimmt in Richtung auf den Trommelmantel nach und nach ab zu einem Wert 0.
Auf diese Weise wird beim Entleeren des jeweiligen von einem Mantelteil der Trommel gebildeten Behälters, ein mit der Flüssigkeit mitgeführtes Sediment aufgefangen und auf das Filterband 21 abgegeben. Dadurch wird mitgeführtes Sediment auf begrenzte Flächen des Filterbandes konzentriert.
Um zu gewährleisten, daß die Taschen sich vollständig entleeren und vor erneuter Füllung frei von Sedimenten sind, ist ein Abstreicher vorgesehen, der aus einem um einen Stab 62 schwenkbaren Arm 63 besteht, der an seinem Ende eine Klinge 64 aus Gummi trägt, die etwa radial zum Trommelmittelpunkt ausgerichtet ist. Diese Klinge aus Gummi kann nun dadurch, daß das Zellenband mit dem darauf liegenden Flies sich bereits unterhalb der Anordnung des Abstreifers von der Trommel trennt in das U-förmige Gebilde auf dem Trommelmantel eintreten und restliches Sediment herausstreichen.
Sobald sie den höchsten Punkt auf der schrägen Fläche erreicht hat, fällt sie zurück auf die äußere Oberfläche des betreffenden Mantelteils, um bei weiterer Drehung der Trommel auf der nächstfolgenden Schrägfläche wieder emporzugleiten, worauf sich das Spiel wiederholt und wobei Sediment entfernt wird.
Ein Anschlag (nicht gezeigt) verhindert, daß die Klinge durch eine Öffnung 3 im Trommelmantel in das Innere der Trommel hineinfällt und bei weiterer Drehung zerstört wird.
In Fig. 1 sind auf der Außenseite des Mantels der Trommel Einbauten flanschförmiger Gestalt vorgesehen, die das Bennenungszeichen 6 tragen. Diese flanschförmigen Teile bilden quasi die Ansätze seitlich der keilförmigen Taschen.

Alle sonstigen Funktionen hinsichtlich Bewegung, Antrieb, Filterbandzuführung, Preßwalze usw., entsprechen denen der Fig. 1 bis 4. Aufgrund der Verwendung eines wasserdichten Antriebmotors 31 kann die Vorrichtung kompakter als die nach Figur 1 ausgeführt sein.

**Ansprüche**

1. Vorrichtung zum Abtrennen von Feststoffen aus einer Flüssigkeit oder zum Abtrennen von aus Emulsionen ausgefällten Sedimenten mit einer Mischvorrichtung, einem Reaktionsbehälter in welchem ein zudosiertes Chemikaliengemisch mit der Flüssigkeit vermischt wird, einem Filterband und einer Trommel um die das Filterband verläuft und ein endloses Förderband aus einzelnen Gliedern <in Umdrehungen versetzt> das die Trommel, die in einer Bucht des Förderbandes schwimmend ruht, <-> und wobei das Filterband zwischen dem Förderband und dem Trommelmantel mitgenommen wird, **dadurch gekennzeichnet**, daß die Trommel (1) einen Mantel (2) mit wenigstens einer Öffnung (3) aufweist und die Seitenwände der Trommel (1) mit Ausnehmungen (7) versehen sind, in die das Gehäuse (23) einer Dosiervorrichtung (24) hineinragt, das eine Konsole (32) trägt auf der die Mischvorrichtung (34) angeordnet ist, sowie ein Niveauschalter (36) und die zu behandelnde Flüssigkeit über die Ausnehmungen in das Trommelinnere eingeleitet ist.

2. Vorrichtung nach Anspruch 1, **dadurch gekennzeichnet**, daß der Trommelmantel wenigstens zwei einander gegenüberliegende Öffnungen (3) enthält und daß die kreisförmigen Seitenwände (4) mit ihren Rändern flanschartig (5) über dem Trommelmantelumfang hinausstehen und zwischen sich das endlose Gliederband (10) mit seinem oberen Trum aufnehmen.

3. Vorrichtung nach Anspruch 1 und 2, **dadurch gekennzeichnet**, daß das endlose, den Antrieb der Trommel 1, bewirkende Gliederband über Führungsrollen (12,13,14,15) geführt ist, die auf Stangen drehbar gelagert sind, welche gleichzeitig Distanzelemente für die Seitenwände (17,18) des Gehäuses der Vorrichtung sind.

4. Vorrichtung nach Anspruch 1 bis 3, **dadurch gekennzeichnet**, daß eine weitere Führungsrolle (11) als Antriebsrolle für das Gliederband ausgebildet ist und so angeordnet ist, daß es mit der gegenüberliegenden Führungsrolle (15) einen Abstand aufweist der etwa dem Durchmesser der Trommel entspricht.

5. Vorrichtung nach Anspruch 1 bis 4, **dadurch gekennzeichnet**, daß zwischen den unteren Enden bzw. Rändern der Seitenwände (17,18) der Vorrichtung eine wannenförmige Platte (37) befestigt ist, die das Filtrat der Trommel auffängt und in eine Sammelrinne (40) leitet, aus der es über einen Ablaufstutzen (55) abführbar ist.

6. Vorrichtung nach Anspruch 1 bis 5, **dadurch gekennzeichnet**, daß die beiden Seitenwände (17,18) der Vorrichtung Konsolen (28,29) tragen an denen einmal eine Dosiervorrichtung (24) befestigt ist, zum anderen ein Antriebsmotor für die Welle (27) der Schnecke (25) der Dosiervorrichtung, wobei die Welle (27) über die gegenüberliegende Seitenwand (18) der Vorrichtung hinausragt, aufsteckbarer, regelbarer.

7. Vorrichtung nach Anspruch 1 bis 6, **dadurch gekennzeichnet**, daß der Antriebsmotor für das endlose Gliederband (10) ebenfalls auf der Seite der Vorrichtung befestigt ist, auf der der Antrieb für die Schnecke (25) der Dosiervorrichtung liegt.

8. Vorrichtung nach Anspruch 1 bis 7, **dadurch gekennzeichnet**, daß am Austragsende des zwischen Trommelmantel und Gliederband mitgeförderte Filterband zwei Führungsrollen (14,15) angeordnet sind, deren Lagerebene derart geneigt und beide Rollen derart weit voneinander entfernt sind, daß die Flüssigkeit nach außen abfließt und eine Preßwalze (43) auf das Stück des Filterbandes mit ihrem Gewicht einwirkt, das zwischen den Führungsrollen (14 und 15) liegt.

9. Vorrichtung nach Anspruch 8, **dadurch gekennzeichnet**, daß die Preßwalze (43) zwischen zwei Hebelarmen (45) gelagert ist, die wiederum in Schwenklager (46) auf den Rändern der Seitenwände (17,18) der Vorrichtung verschwenken.

10. Vorrichtung nach Anspruch 1-9, **dadurch gekennzeichnet**, daß auf der äußeren gekrümmten Oberfläche der Trommelmantelteile 2' im Querschnitt keilförmig gestaltete Taschen 57 angeordnet sind.

11. Verfahren zur Behandlung von Flüssigkeiten durch Zufügung eines Chemikaliengemisches mit einer Vorrichtung gemäß Anspruch 1-10, wobei des Reaktionsgemisch anschließend reagieren und sedimentieren gelassen und danach abfiltriert wird, **dadurch gekennzeichnet**, daß die Verfahrensschritte nacheinander durchgeführt werden und die Trommel 1 mit einer solchen Geschwindigkeit gedreht wird, daß sich die in der Trommel befindliche Flüssigkeit dann zu entleeren beginnt über eine der Öffnungen 3 im Mantel 2 der Trommel 1, wenn die Reaktion zwischen dem Chemikaliengemisch und der Flüssigkeit weitgehend abgeschlossen ist und Sedimentation im wesentlichen stattgefunden hat.

12. Verfahren nach Anspruch 11, **dadurch gekennzeichnet**, daß die Trommel unter Berücksichtigung der Reaktions- und Sedimentationsgeschwindigkeit gedreht wird, entweder schrittweise oder kontinuierlich.

Fig. 1

Fig. 2

Fig. 3

Fig. 4

Fig. 7

Fig. 5

Fig.6